(19) Europäisches Patentamt
European Patent Office
Office européen des brevets

(11) **EP 2 098 902 A1**

(12) **EUROPEAN PATENT APPLICATION**

(43) Date of publication:
**09.09.2009 Bulletin 2009/37**

(51) Int Cl.:
**G02C 7/02** *(2006.01)*　　**G02C 13/00** *(2006.01)*

(21) Application number: **09003083.4**

(22) Date of filing: **04.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **06.03.2008 JP 2008056085**
**10.12.2008 JP 2008314741**

(71) Applicant: **Seiko Epson Corporation**
**Shinjuku-ku,**
**Tokyo (JP)**

(72) Inventors:
• **Shinohara, Toshihide**
**Suwa-shi**
**Nagano 392-8502 (JP)**
• **Kaga, Tadashi**
**Suwa-shi**
**Nagano 392-8502 (JP)**

(74) Representative: **HOFFMANN EITLE**
**Patent- und Rechtsanwälte**
**Arabellastrasse 4**
**81925 München (DE)**

(54) **Simulation apparatus, simulation program, and recording medium on which simulation program is recorded**

(57)　　The present invention pertains to a simulation apparatus (1), comprising a design unit (162) which designs a spectacle lens in accordance with a lens wearer's vision; a virtual space construction unit (161) which constructs a virtual space; a viewpoint setting unit (171) which sets a viewpoint in the virtual space; an image compilation unit (181) which compiles a basic image representing a field of view at the viewpoint; an intermediate processing unit (182) which processes the basic image in accordance with the vision, and compiles an intermediate image representing a field of view at the viewpoint with the lens wearer's unaided eye; a wearing condition processing unit (183) which processes the intermediate image, and compiles a wearing condition image representing a field of view at the viewpoint obtained when the lens wearer wears the spectacle lens; a display unit (13) which displays the wearing condition image; a viewpoint movement unit (172) which moves the viewpoint in the virtual space; and a movement behavior setting unit (173) which sets a movement behavior of the viewpoint, wherein the viewpoint movement unit moves the viewpoint while periodically fluctuating the viewpoint in at least a vertical direction in accordance with the movement behavior.

FIG. 1

EP 2 098 902 A1

**Description**

BACKGROUND

1. Technical Field

The present invention relates to a simulation apparatus, a simulation program, and a recording medium on which the simulation program is recorded, for simulating a visibility with a spectacle lens.

2. Related Art

To date, a simulation apparatus has been known which simulates a visibility with a spectacle lens in a display area of a display device (for example, refer to JP-A-2006-343778).
According to this kind of apparatus, as it is possible to confirm the visibility with the spectacle lens by means of a simulation image, it is possible to prevent a problem wherein a manufactured spectacle lens is not appropriate for a customer.
Meanwhile, a simulation apparatus is known which, constructing a structure such as a dwelling house in a virtual space, simulates a visibility of the structure from a specific viewpoint in the virtual space (for example, refer to JP-A-7-73338).
According to this kind of apparatus, for example, by freely moving the viewpoint inside the dwelling house, it is possible to artificially experience an indoor visibility from a variety of positions and directions inside the dwelling house, an effect of lighting apparatus, and the like, with a sensation of actually moving inside the house. Moving the viewpoint in the virtual space in this way is called a walk through.
Herein, by combining the simulation apparatus described in JP-A-2006-343778 and JP-A-7-73338, it is possible to represent an ambient visibility obtained when moving wearing the spectacle lens.
However, with the heretofore known walk through simulation, there has been a problem in that the movement of the viewpoint is linear, and lacks in realisticness.
For example, when a human makes a movement by means of a walk (including an ambulation, a running, and the like), or an ascending or descending of stairs, a vertical movement and a horizontal shaking of a head occurs corresponding to a step (footwork), and the viewpoint (a position of an eye) also fluctuates along with this.
With the heretofore known walk through simulation, as the viewpoint is moved linearly by a specification of a direction and a speed, the fluctuation of the viewpoint corresponding to the step is not represented, and only an unnatural simulation, wherein one seems to slide through the virtual space, is possible.
Also, when simulating the visibility with the spectacle lens, in particular with a progressive refractive power lens, there is the following kind of problem.
Although the progressive refractive power lens includes a distance portion, an intermediate portion, and a near portion, appropriate to a distance of a subject, in general, there being an optical distortion due to the addition power in the intermediate portion and the near portion, positioned at the lower portion of the progressive refractive power lens, a floating phenomenon occurs due to a prismatic action. It is known that the floating phenomenon, in an initial period when a use of the progressive refractive power lens is started, gives rise to a noticeable discomfort and unease when walking, or ascending or descending stairs.
With the heretofore known walk through simulation in which the viewpoint moves linearly, it not being possible to provide an artificial experience of the floating phenomenon caused when walking, or ascending or descending stairs, it is not possible to accurately represent vision and a sensation obtained when wearing the spectacle lens.

SUMMARY

An advantage of some aspects of the invention is to provide a simulation apparatus, a simulation program, and a recording medium on which the simulation program is recorded, which can represent, in a walk through simulation, a fluctuation of a viewpoint corresponding to a lens wearer's action.
Also, a further advantage of some aspects of the invention is to provide a simulation apparatus, a simulation program, and a recording medium on which the simulation program is recorded, which can accurately represent vision and a sensation obtained when wearing a spectacle lens.
A simulation apparatus of one aspect of the invention includes a design unit which designs a spectacle lens in accordance with a lens wearer's vision, a virtual space construction unit which constructs a virtual space, a viewpoint setting unit which sets a viewpoint in the virtual space; an image compilation unit which compiles a basic image representing a field of view at the viewpoint, an intermediate processing unit which processes the basic image in accordance with the vision, and compiles an intermediate image representing a field of view at the viewpoint with the lens wearer's unaided eye, a wearing condition processing unit which processes the intermediate image, and compiles a wearing condition image representing a field of view at the viewpoint obtained when the lens wearer wears the spectacle lens, a display unit which displays the wearing condition image, a viewpoint movement unit which moves the viewpoint in the virtual space, and a movement behavior setting unit which sets a movement behavior of the viewpoint. The viewpoint movement unit moves the viewpoint while periodically fluctuating the viewpoint in at least a vertical direction in accordance with the movement behavior.
According to this aspect of the invention, the image compilation unit compiles a basic image representing a field of view at a viewpoint set in the virtual space. The intermediate processing unit and wearing condition processing unit process the basic image, and a wearing condition image representing a field of view obtained when the lens wearer wears the spectacle lens is compiled.

Herein, although the viewpoint is moved by the viewpoint movement unit, the wearing condition image is compiled at each viewpoint position during the movement, and continuously displayed on the display unit.

By this means, it is possible to represent an ambient visibility obtained when moving wearing the spectacle lens.

In particular, in this aspect of the invention, as the viewpoint movement unit moves the viewpoint while periodically fluctuating the viewpoint in at least a vertical direction in accordance with the movement behavior set by the movement behavior setting unit, it is possible, for example, to represent the vertical movement of the head, and the fluctuation of the viewpoint, corresponding to the step (footwork).

By this means, a realisticness of the simulation increases significantly, and it is possible to accurately represent the vision and the sensation obtained when moving wearing the spectacle lens. For example, it is possible to impart a sensation obtained when the floating phenomenon occurs, due to the optical distortion, or the prismatic action, of the spectacle lens, to someone watching the display unit.

For this reason, according to the simulation apparatus of this behavior of the invention, it being possible to confirm the vision and the sensation obtained when wearing the spectacle lens, it is possible to prevent a problem wherein the actually manufactured spectacle lens is not appropriate for the customer, or the like, who is the lens wearer.

As the movement behavior set by the movement behavior setting unit, it is possible to envisage practically every movement behavior conceivable as a human's way of moving, such as, for example, a movement by walking, such as an ambulation or a running, an ascending or descending by stairs, an escalator, a ladder or the like, or a movement by a means of transport such as a bicycle, a motorcycle or a car.

In the simulation apparatus according to this aspect of the invention, it is preferable that the movement behavior setting unit can set a movement by walking as the movement behavior.

According to this aspect of the invention, it is possible to confirm, by simulation, the vision, and the sensation, at a time of a movement by walking, which is the movement behavior with the highest frequency of use in everyday life, and is also a movement behavior with which the floating phenomenon is likely to occur. Consequently, it is possible to more reliably prevent the problem wherein the actually manufactured spectacle lens is not appropriate for the customer, or the like, who is the lens wearer.

There being no limit to a movement speed of the walking as referred to in the invention, not only an ambulation, which is a movement from a low speed to an intermediate speed, but also a running, which is a movement at a high speed, is included in the walking.

In the simulation apparatus according to this aspect of the invention, it is preferable that the movement behavior setting unit can set a movement by ascending or descending stairs as the movement behavior.

According to this aspect of the invention, it is possible to confirm, by simulation, the vision, and the sensation, at a time of a movement by ascending or descending stairs, which is a movement behavior with a comparatively high frequency of use in everyday life, and is also the movement behavior with which the floating phenomenon is most likely to occur.

Consequently, it is possible to more reliably prevent the problem wherein the actually manufactured spectacle lens is not appropriate for the customer, or the like, who is the lens wearer.

In the simulation apparatus according to this aspect of the invention, it is preferable that the movement behavior setting unit includes a stride length setting unit which sets a stride length of the lens wearer, and a speed setting unit which sets a movement speed of the viewpoint, wherein the viewpoint movement unit, in accordance with the stride length and movement speed, periodically fluctuates a height of the viewpoint from a floor level in the virtual space.

The vertical movement of the head caused when a human moves is greatly affected by the stride length and the movement speed. For example, when the stride length is large, and when the movement speed is high, it can be supposed that the vertical movement of the head is large.

According to this aspect of the invention, as the viewpoint movement unit periodically fluctuates the height of the viewpoint in accordance with the stride length and movement speed, which have a large effect on the viewpoint fluctuation, it is possible to accurately represent the vision, and the sensation, at the time of moving.

In the simulation apparatus according to this aspect of the invention, it is preferable that the movement behavior setting unit includes a reference height setting unit which sets a height of the lens wearer's eye from the floor level as a reference height H, and a parameter calculation unit which, based on the stride length and movement speed, calculates a period $\omega$ of the lens wearer's footwork and a magnitude $\alpha$ of a fluctuation of the viewpoint in the vertical direction, wherein the viewpoint movement unit fluctuates the viewpoint in the vertical direction in such a way that a height h of the viewpoint from the floor level in the virtual space obtained when a time t has elapsed from a start of the viewpoint movement becomes $h = H + \alpha \cdot \sin(2\pi t/\omega)$.

It can be supposed that the vertical movement of the head caused when a human moves is a periodic one coordinated with the period ω of the human's footwork. Then, it can be supposed that the vertical movement of the head is repeated at the constant magnitude α, centered on the reference height H, which is the height of the eye obtained when standing upright.

Herein, the period ω can be calculated simply as, for example, ω = movement speed / stride length. Also, as it can be supposed that there is a correlation between the magnitude α and the stride length and movement speed, as heretofore described, it is possible to calculate the magnitude α from the stride length and movement speed.

In this aspect of the invention, the viewpoint movement unit, based on the reference height H set by the reference height setting unit, and on the period ω and magnitude α calculated by the parameter calculation unit, fluctuates the viewpoint in the vertical direction in such a way that the height h of the viewpoint obtained when a time t has elapsed from a start of the viewpoint movement becomes h = H + α·sin (2πt/ω).

By this means, it is possible, based on a simplified conditional expression, to simulate the fluctuation of the viewpoint in the vertical direction, while keeping an amount of calculation to a minimum.

In the simulation apparatus according to this aspect of the invention, it is preferable that in the event that the movement behavior setting unit sets the movement by ascending or descending the stairs, the stride length setting unit sets a depth of a stair tread of the stairs as the stride length.

When ascending or descending stairs, normally, a human's stride length becomes equivalent to the depth of a stair tread. Bearing this in mind, in this aspect of the invention, the stride length setting unit sets the depth of a stair tread of the stairs as the stride length. By this means, actually measuring the stride length of a spectacles wearer, and inputting the stride length into the simulation apparatus, becomes unnecessary, and it is possible to simplify the operation of the simulation apparatus.

In the simulation apparatus according to this aspect of the invention, it is preferable that the viewpoint movement unit moves the viewpoint while periodically fluctuating the viewpoint in the horizontal direction in accordance with the movement behavior.

According to this aspect of the invention, as the viewpoint is periodically fluctuated, not only in the vertical direction, but also in the horizontal direction, it is possible to represent vision, and a sensation, which are nearer to reality.

As the periodic fluctuation in the horizontal direction, a fluctuation such as, for example, fluctuating the viewpoint to the right when putting the right foot forward, and fluctuating the viewpoint to the left when putting the left foot forward, is included.

In the simulation apparatus according to this aspect of the invention, it is preferable that the spectacle lens is a progressive refractive power lens which has a progressive surface.

According to this aspect of the invention, it is possible to confirm, by simulation, the vision, and the sensation, at the time of a movement for the progressive refractive power lens with which, there being an optical distortion due to the addition power at the lower portion of the lens, the floating phenomenon is particularly likely to be a problem.

Consequently, it is possible to more reliably prevent the problem wherein the actually manufactured spectacle lens is not appropriate for the customer, or the like, who is the lens wearer.

A simulation program according to another aspect of the invention causes a calculation unit to function as the heretofore described simulation apparatus.

According to this aspect of the invention, the calculation unit is caused to function as the heretofore described kind of simulation apparatus by the simulation program. By this means, as heretofore described, it being possible to confirm the vision and the sensation obtained when wearing the spectacle lens, it is possible to prevent the problem wherein the actually manufactured spectacle lens is not appropriate for the customer, or the like, who is the lens wearer.

A simulation program recording medium according to another aspect of the invention has recorded thereon the heretofore described simulation program in such a way as to be readable by the calculation unit.

According to this aspect of the invention, the heretofore described kind of simulation program is recorded on the recording medium in such a way as to be readable by the calculation unit. By this means, by causing the calculation unit to read the recording medium, it is possible to cause the calculation unit to execute the heretofore described kind of simulation program.

BRIEF DESCRIPTION OF THE DRAWINGS

The invention will be described with reference to the accompanying drawings, wherein like numbers reference like elements.

Fig. 1 is an outline diagram showing a configuration of a simulation apparatus according to an embodiment of the invention.

Fig. 2 shows an outline of an operation of the simulation apparatus according to the embodiment of the invention.

Fig. 3 shows a virtual space constructed by a virtual space construction step according to the embodiment of the invention.

Fig. 4 shows an outline of an image display step according to the embodiment of the invention.

Figs. 5A, 5B and 5C show images compiled by the image display step according to the embodiment of the invention.

Fig. 6 shows an outline of a movement behavior setting step according to the embodiment of the invention.

Fig. 7 shows a relationship between a time t and a height h in a viewpoint movement step according to the embodiment of the invention.

Fig. 8 shows a relationship between the time t and the height h in the viewpoint movement step according to the embodiment of the invention.

Fig. 9 shows a relationship between the time t and a height h' in the viewpoint movement step according to the embodiment of the invention.

Fig. 10 shows a relationship between the time t and a fluctuation of a viewpoint in a horizontal direction in the viewpoint movement step according to the embodiment of the invention.

DESCRIPTION OF EXEMPLARY EMBODIMENTS

Hereafter, a description will be given, based on the drawings, of a simulation apparatus of a first embodiment according to the invention.

Configuration of Simulation Apparatus

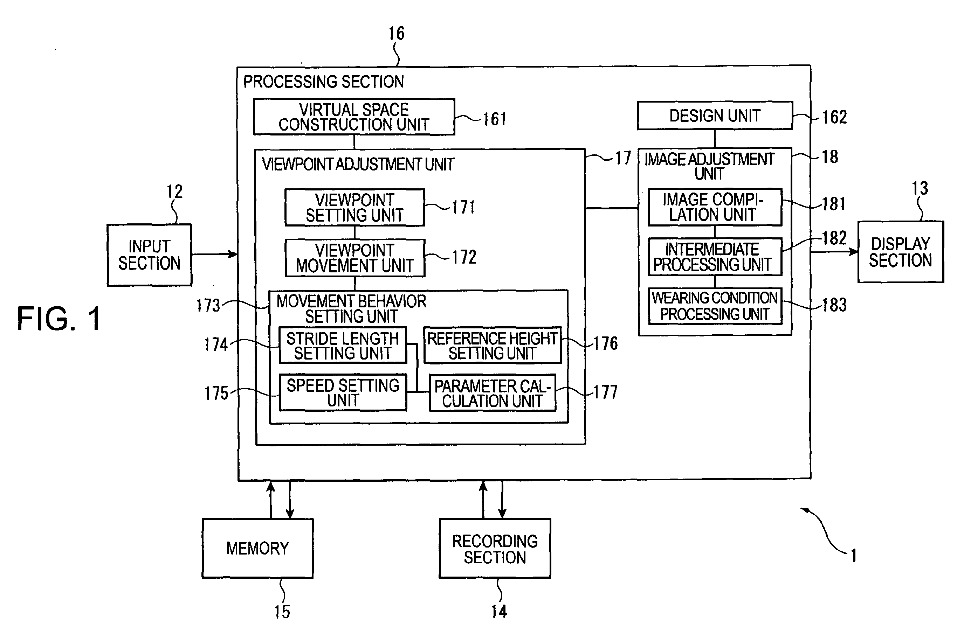

Fig. 1 shows an outline configuration of a simulation apparatus 1 according to the embodiment.

The simulation apparatus 1 is installed in, for example, a spectacle lens retail store, or the like.

Although, in the embodiment, a personal computer is given as an example of the simulation apparatus 1, not being limited to this, it is also acceptable to use another calculation unit such as, for example, a mobile telephone.

The simulation apparatus 1, as shown in Fig. 1, includes an input section 12, a display section 13 as a display unit, a recording section 14 as an image recording unit, a memory 15, a processing section 16, and the like.

The input section 12 has various kinds of unshown operating button, operating knob, and the like, operated for input by, for example, a keyboard, a mouse, or the like.

An input operation with the operating buttons, operating knobs, and the like, is a setting input of a setting item, such as a setting of simulation apparatus 1 operational details, or a setting of information stored in the simulation apparatus 1.

Then, the input section 12, by means of the setting item input operation, appropriately transmits a signal corresponding to the setting item to the processing section 16, causing the setting to be input.

As the input operation, not being limited to the operation with the operating buttons, operating knobs, and the like, it is also acceptable to adopt a configuration wherein the various kinds of setting item are set and input by means of, for example, an input operation using a touch panel provided on the display section 13, a spoken input operation, or the like.

The display section 13, being controlled by the processing section 16, displays an image information signal input from the processing section 16 on a screen in an unshown display area.

As the display section 13, for example, a liquid crystal panel or organic EL (Electro Luminescence) panel, a PDP (Plasma Display Panel), a CRT (Cathode Ray Tube), an FED (Field Emission Display), an electrophoretic display panel, or the like, can be given as an example.

The recording section 14 saves, that is, retrievably stores, various kinds of data such as, for example, customer data.

As the recording section 14, it is acceptable to adopt a configuration including a drive, a driver, or the like, which retrievably stores data on a recording medium such as an HD (Hard Disc), a DVD (Digital Versatile Disc), an optical disc, or a memory card.

Herein, the customer data are data relating to a prescription, or the like, of a lens ordered by a customer who is a lens wearer. The customer data are configured as one item of data in which are correlated customer ID data, prescription data, lens shape design data, and the like.

Lens design data of some aspects of the invention are constructed of the prescription data and the lens shape design data.

The customer ID data, being unique information for identifying the customer data, are information set for each item of the customer data. As the customer ID data, customer personal information relating to, for example, a customer number set for each customer, a customer name, or the like, can be given as an example.

The prescription data are data, of the customer data identified by the customer ID data, relating to a customer's vision or lens prescription. Vision data relating to the customer's vision, lens prescription data relating to a prescription of a lens to be designed, and the like, are recorded in the prescription data.

Information relating to, for example, vision in the customer's unaided eye, such as the customer's visual acuity, and the presence or otherwise of an astigmatism, is recorded in the vision data. Also, data relating to a lens power, a near addition power, a spherical power, a cylindrical power, a cylinder axis, an inset of near visual point, a near nasal decentering amount, and the like, are recorded in the lens prescription data.

The lens shape design data are data relating to a shape of a lens. For example, a refractive index and Abbe number of a lens material, lens refractive surface (front surface and back surface) coordinate value data, thickness data for a lens central thickness and the like, design parameters of a progressive power gradient length and the like, data relating to a lens shape, a lens size, and a shape of a spectacle frame, and the like, are recorded. Also, it is also possible to include data on a refraction action (a refractive power, a prismatic action, and the like) at each point on a lens.

The memory 15 stores the setting items input by operation in the input section 12, audio information, image information, and the like, so as to be appropriately retrievable. Also, various kinds of program, and the like, developed in an OS (Operating System) which operationally controls a whole of the simulation apparatus 1, are stored in the memory 15. As the memory 15, it is acceptable to adopt a configuration including a drive, a driver, or the like, which retrievably stores information and programs on a recording medium such as an HD, a DVD, or an optical disc.

The processing section 16 has various kinds of unshown input-output port such as, for example, a key input port to which the input section 12 is connected, a display port to which the display section 13 is connected, a memory port to which the recording section 14 is connected, and a memory port to which the memory 15 is connected.

Then, the processing section 16, as the various kinds of program, as shown in Fig. 1, includes a virtual space construction unit 161, a design unit 162, a viewpoint adjustment unit 17, an image adjustment unit 18, and the like.

The virtual space construction unit 161, based on various kinds of data input by a user by means of an operation of the input section 12, and on various kinds of data acquired from the recording section 14, constructs a virtual space including a structure such as a dwelling house.

The design unit 162, based on the prescription data and lens shape design data retrieved from the recording section 14, designs a spectacle lens in accordance with the vision of the customer.

The viewpoint adjustment unit 17 has a viewpoint setting unit 171, which sets a viewpoint in the virtual space, a viewpoint movement unit 172 which, in accordance with a movement behavior, moves the viewpoint in an vertical direction, and furthermore, when necessary, in a right-left direction, while periodically fluctuating it, and a movement behavior setting unit 173, which sets the movement behavior of the viewpoint.

The movement behavior setting unit 173 has a stride length setting unit 174, which sets a customer' s stride length, and a speed setting unit 175, which sets a viewpoint movement speed.

Also, the movement behavior setting unit 173 has a reference height setting unit 176, which sets a height of the customer's eye from floor level as a reference height H, and a parameter calculation unit 177 which, based on the stride length and movement speed, calculates a period $\omega$ and an vertical direction magnitude $\alpha$, to be described hereafter. The parameter calculation unit 177, furthermore, is configured in such a way that, based on the stride length and movement speed, it can calculate a period $2\omega$ and a horizontal direction magnitude $\beta$.

The image adjustment unit 18 has an image compilation unit 181, which compiles a basic image representing a field of view at the viewpoint in the virtual space, an intermediate processing unit 182, which processes the basic image and compiles an intermediate image, and a wearing condition processing unit 183, which processes the intermediate image and compiles a wearing condition image.

The wearing condition image compiled by the image adjustment unit 18 is displayed on the display section 13.

Operation of Simulation Apparatus

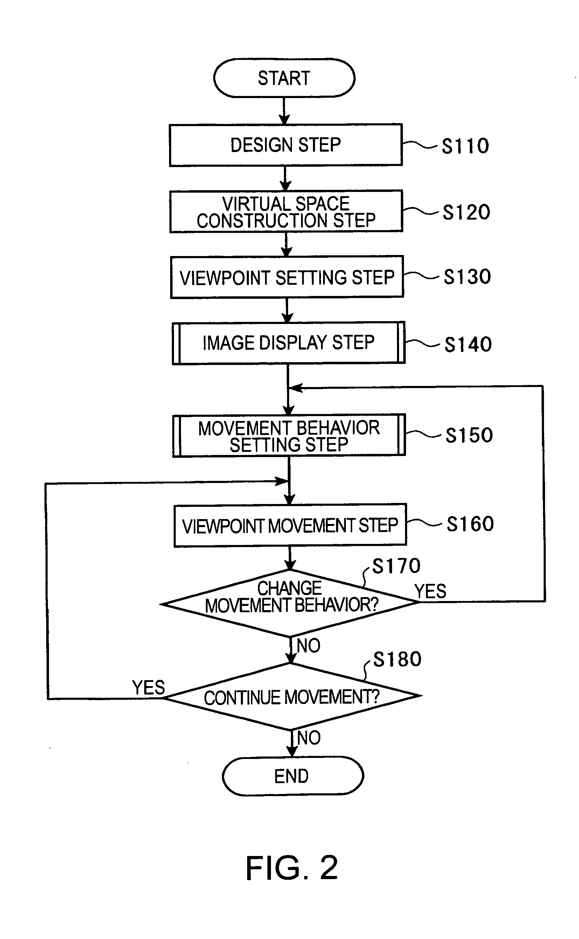

Hereafter, a description will be given, referring to Fig. 2, of an operation of the simulation apparatus 1.

In the embodiment, the spectacle lens is a progressive refractive power lens which has a progressive surface.

Firstly, in a design step S110, the design unit 162, based on the prescription data and lens shape design data retrieved from the recording section 14, designs a spectacle lens in accordance with the customer's vision.

Next, in a virtual space construction step S120, based on various kinds of data input by a user by means of an operation of the input section 12, and on various kinds of data acquired from the recording section 14, a virtual space, including a structure such as a dwelling house, is constructed.

For example, optional data, from among data on standard structures recorded in advance in the recording section 14, are selected, and a virtual space including these is constructed. Then, it is acceptable to perform a change of details, and the like, of the structure by operating the input section 12.

Also, it is also acceptable to record a standard virtual space in the recording section 14, and simply retrieve it.

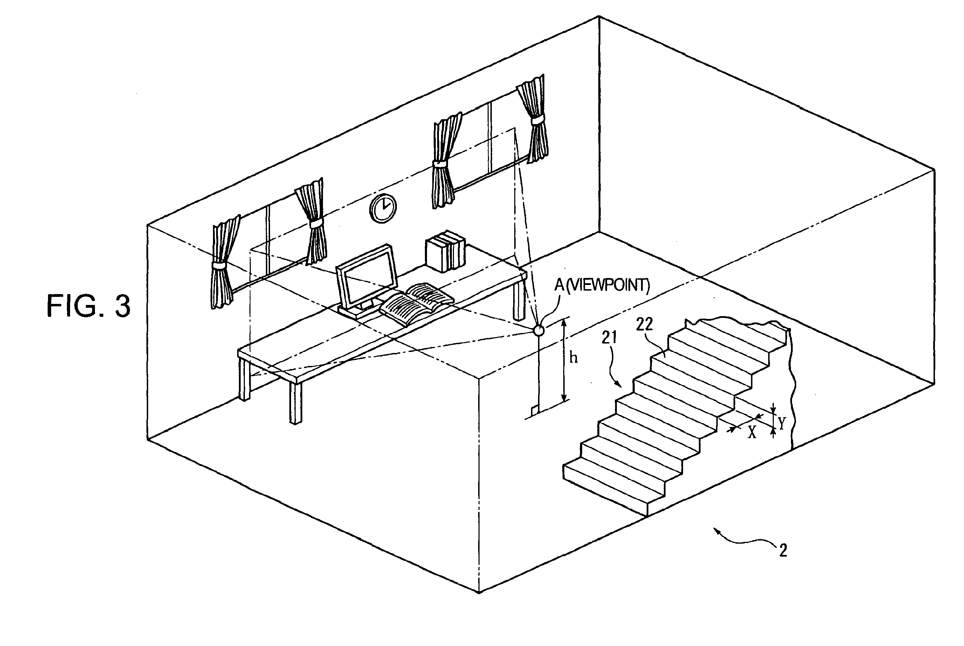

In the embodiment, as one example, the kind of virtual space, including a building 2 which has stairs 21, shown in Fig. 3 is constructed.

Subsequently, in a viewpoint setting step S130, the viewpoint setting unit 171 sets the viewpoint in the virtual space. The viewpoint setting unit 171 can set the viewpoint based on an operation of the input section 12, and can also select a standard position recorded in the recording section 14 as the viewpoint.

For example, the viewpoint setting unit 171 sets a position shown by A in Fig. 3 as the viewpoint.

On the viewpoint being set, an image display step S140 is executed. Although the image display step S140 is only displayed once in Fig. 2, it is actually executed repeatedly, at predetermined intervals, after the first execution shown in Fig. 2.

Image Display Step S140

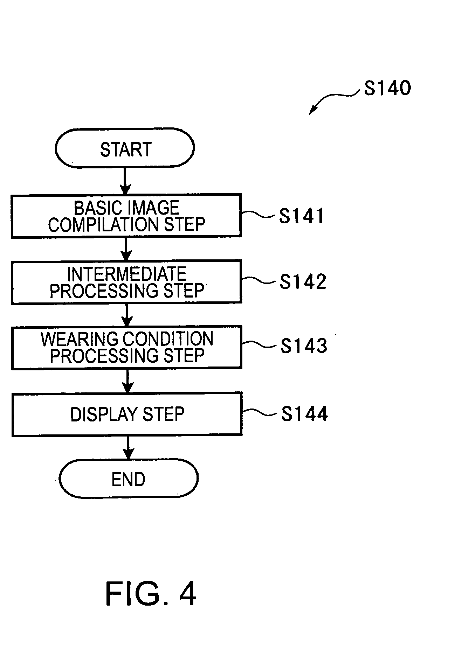

Fig. 4 shows an outline of the image display step S140.

Firstly, in a basic image compilation step S141, the image compilation unit 181 compiles a basic image 201 representing a field of view at the viewpoint in the virtual space.

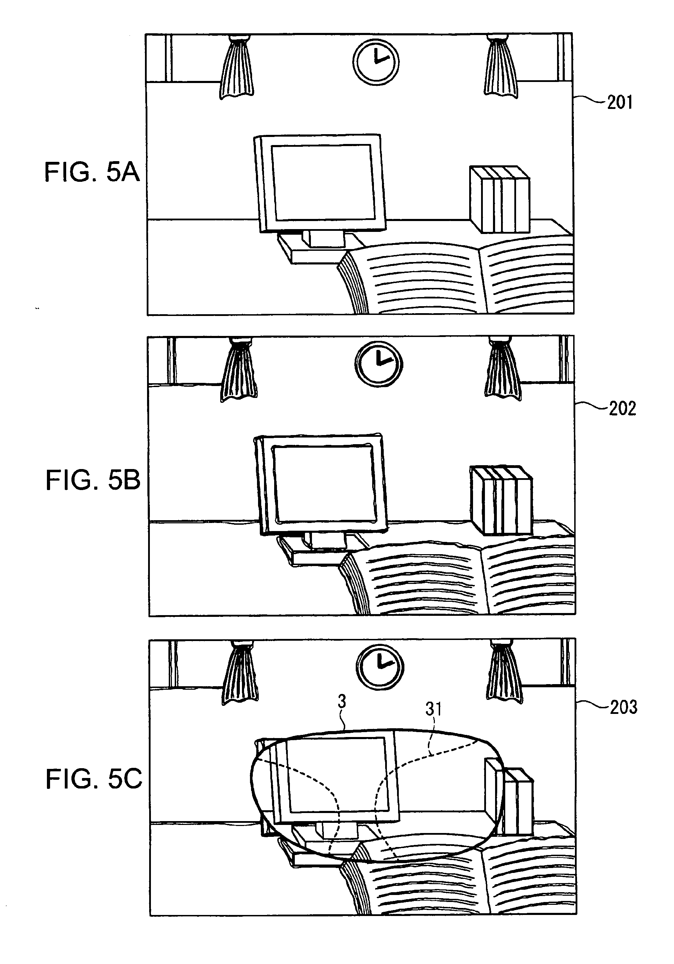

For example, in the event that the viewpoint is in the position A of Fig. 3, the kind of basic image 201 of Fig. 5A is compiled.

Next, in an intermediate processing step S142, the intermediate processing unit 182 processes the basic image 201 in accordance with the customer's vision data, that is, the customer's visual acuity with the unaided eye, astigmatism, heterophoria, capability of convergence, and the like, and compiles an intermediate image 202 representing a field of view with the customer's unaided eye at the viewpoint position A.

For example, by blurring an outline of the basic image 201, doubling the outline, smudging colors, and distorting, the kind of intermediate image 202 of Fig. 5B is compiled.

Subsequently, in a wearing condition processing step S143, the wearing condition processing unit 183 processes the intermediate image 202, and compiles a wearing condition image 203 representing a field of view at the viewpoint position A obtained when the customer wears the spectacle lens.

For example, as shown in Fig. 5C, a wearing condition image 203 is compiled in which a field of view through a spectacle lens 3 designed in the design step S110 is represented.

The spectacle lens 3 is a progressive refractive power lens which has a progressive surface. A broken line 31 in Fig. 5C shows a border between a distance portion, an intermediate portion and a near portion, and portions (a left and right of a lower portion of the lens) which cannot be used due to an optical distortion, of the spectacle lens 3, which is a progressive refractive power lens. The distance portion (an upper portion), the intermediate portion and the near portion (the lower portion) of the spectacle lens 3 being processed in such a way that each provides a different visibility, the portions surrounded by the broken line 31 are processed in such a way as to be difficult to see through (an illustration of these processes is omitted from the figure).

Finally, in a display step S144, the wearing condition image 203 is displayed on the display section 13.

After the first image display step S140 has been executed, the movement behavior setting unit 173, in a movement behavior setting step S150, sets the movement behavior of the viewpoint.

Movement Behavior Setting Step S150

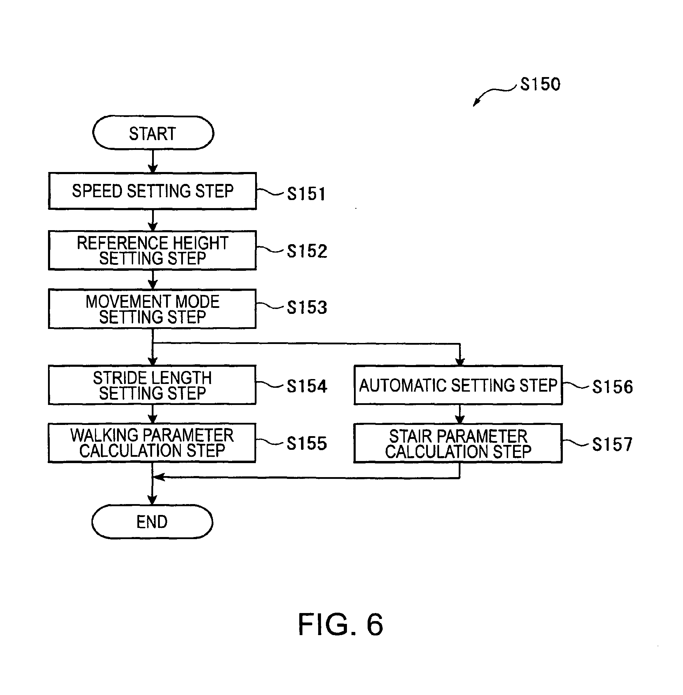

Fig. 6 shows an outline of the movement behavior setting step S150.

Firstly, in a speed setting step S151, the speed setting unit 175 sets the viewpoint movement speed. The speed setting unit 175 can set the movement speed based on an operation of the input section 12, and can also select a standard movement speed recorded in the recording section 14.

Next, in a reference height setting step S152, the reference height setting unit 176 sets the height of the customer's eye from the floor level as the reference height H. The reference height setting unit 176 can set the actual height of the customer's eye as the reference height H, based on an operation of the input section 12, and can also select a standard height recorded in the recording section 14 as the reference height H.

Subsequently, in a movement mode setting step S153, the movement behavior setting unit 173 sets a viewpoint movement direction, and a movement mode.

The movement behavior setting unit 173 can set the movement direction based on an operation of the input section 12, and can also select a standard direction recorded in the recording section 14.

In the embodiment, either of a "movement by walking" or a "movement by ascending or descending the stairs" can be selected as the movement mode by an operation of the input section 12.

In the event of selecting the "movement by walking", a stride length setting step S154 and a walking parameter calculation step S155 are executed. Meanwhile, in the event of selecting the "movement by ascending or descending the stairs", an automatic setting step S156 and a stair parameter calculation step S157 are executed.

In the stride length setting step S154, the stride length setting unit 174 sets the customer's stride length by means of an operation of the input section 12, or a selection of a standard stride length recorded in the recording section 14. As the standard stride length, it is preferable that a stride length appropriate to a scene, such as, for example, a stride length when running or a stride length when walking, is recorded in advance.

In the walking parameter calculation step S155, the parameter calculation unit 177, based on the set stride length and movement speed, calculates the period $\omega$ of a lens wearer's footwork, and the magnitude $\alpha$ of the fluctuation in the vertical direction of the viewpoint.

The period $\omega$ can be calculated simply as, for example, $\omega$ = movement speed / stride length. Also, for example, as a vertical movement of a head is large when the stride length is large, and the movement speed is high, the magnitude $\alpha$ is made large.

Also, when a person walks, the viewpoint fluctuates in the horizontal direction too. Accordingly, in a preferred embodiment, the parameter calculation unit 177, based on the set stride length and movement speed, calculates the magnitude P of the fluctuation in the horizontal direction of the lens wearer's viewpoint. In the case of a person, the magnitude $\beta$ is generally around 0.5 to 2 cm.

In the automatic setting step S156, the stride length setting unit 174 sets a depth X (refer to Fig. 3) of a stair tread 22 of the stairs 21 as the customer's stride length.

Although the stair parameter calculation step S157 is basically the same as the walking parameter calculation step S155, a point of a height Y of one step of the stairs 21 being taken into consideration differs from the walking parameter calculation step S155. Specifically, a way of taking this into consideration includes, for example, making the magnitude α large when the height Y is large, and the like.

The values set, and the parameters calculated, in the movement behavior setting step S150 are transmitted to the viewpoint movement unit 172.

Viewpoint Movement Step S160

In a viewpoint movement step S160, which continues on from the movement behavior setting step S150, the viewpoint movement unit 172 moves the viewpoint in the set direction, at the set movement speed.

At this time, the viewpoint movement unit 172 fluctuates the viewpoint in the vertical direction in such a way that the height h (refer to Fig. 3) of the viewpoint from the floor level in the virtual space obtained when a time t has elapsed from a start of the viewpoint movement, becomes $h = H + \alpha \cdot \sin(2\pi t/\omega)$.

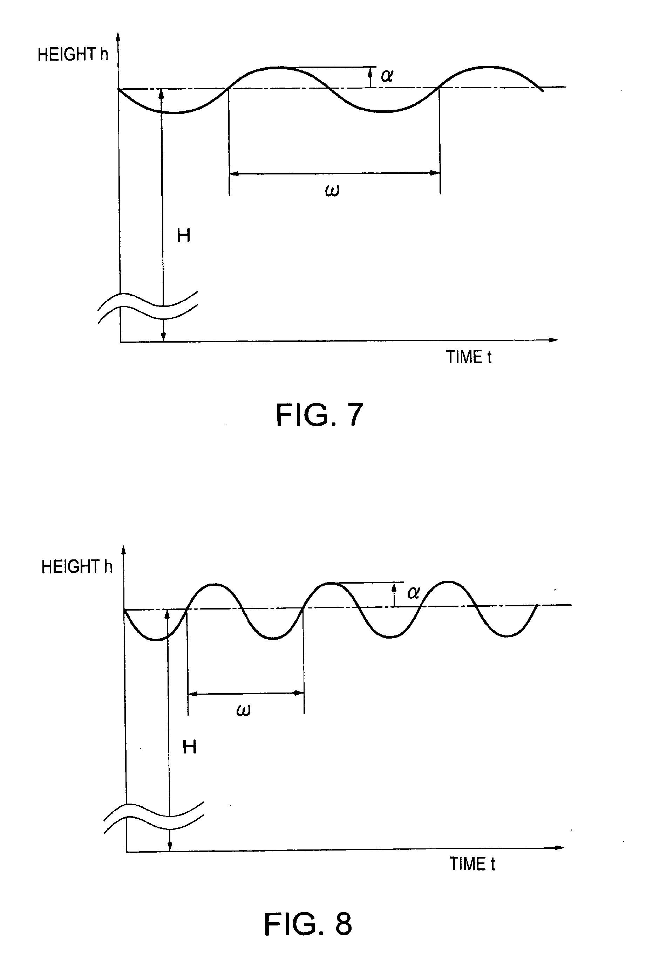

For example, in the event that the "movement by walking" is selected in the movement mode setting step S153, and a walking movement speed is set in the speed setting step S151, the height h fluctuates periodically in relation to the time t in the way shown in Fig. 7.

Also, for example, in the event that the "movement by walking" is selected in the movement mode setting step S153, and a running movement speed is set in the speed setting step S151, the height h fluctuates periodically in relation to the time t in the way shown in Fig. 8.

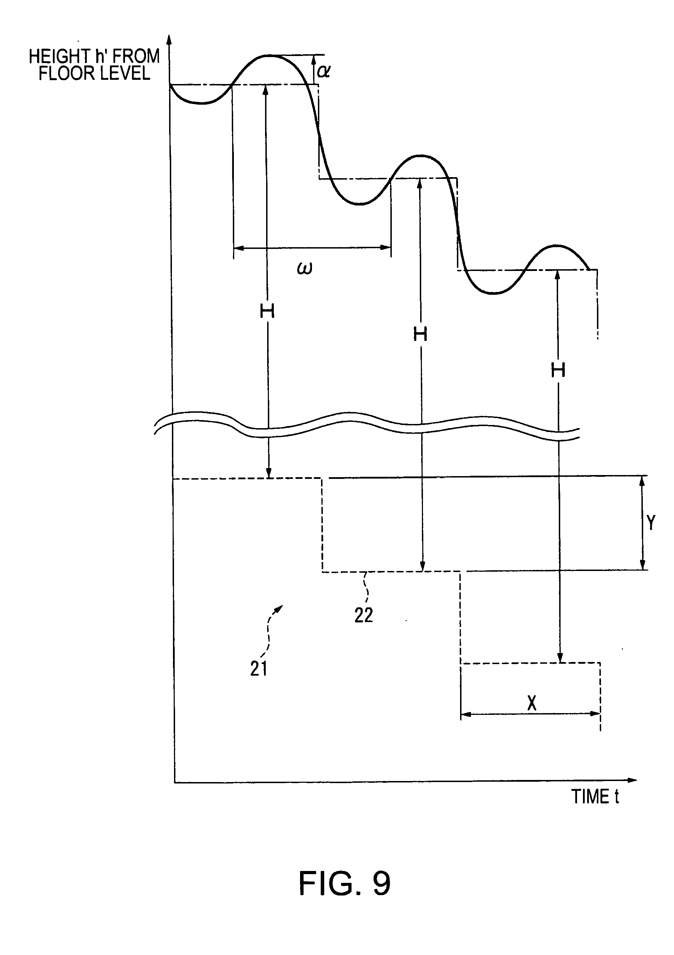

Furthermore, for example, in the event that the "movement by ascending or descending the stairs" is selected in the movement mode setting step S153, and the movement direction is set as a direction of descending the stairs, a height h' from the floor level of the floor below fluctuates periodically in relation to the time t in the way shown in Fig. 9.

In Fig. 9, when taking the stair tread 22 of the stairs 21 to be the floor level, the height h from the floor level approximately satisfies $h = H + \alpha \cdot \sin(2\pi t/\omega)$. However, as a downward movement for descending the stairs takes time, $h = H + \alpha \cdot \sin(2\pi t/\omega)$ is not absolutely true.

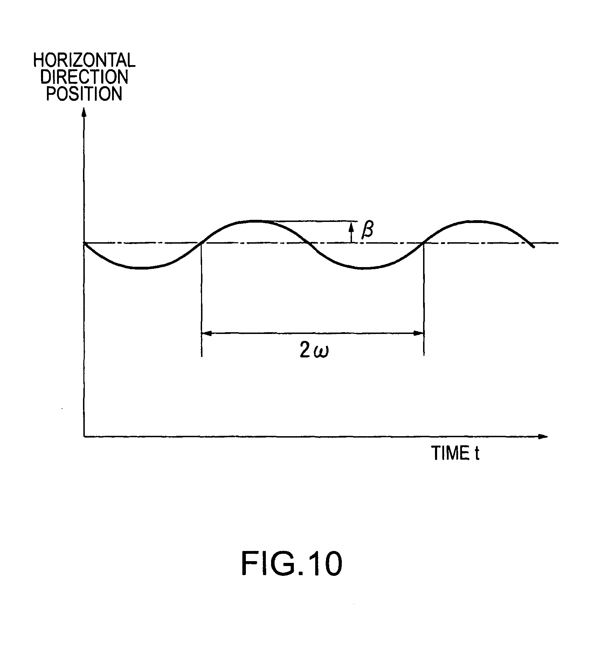

Herein, in the event that the parameter calculation unit 177 calculates the magnitude β of the fluctuation in the horizontal direction of the lens wearer's viewpoint, the viewpoint movement unit 172 fluctuates the viewpoint horizontally by the magnitude β, in the period 2ω, in the way shown in Fig. 10. A lowest point of the fluctuation in the vertical direction is a point of greatest magnitude of the fluctuation in the horizontal direction.

As the display image step S140 is being executed at the predetermined intervals during this kind of viewpoint movement step S160 too, the wearing condition image is continuously displayed on the display section 13 at each point during the movement.

On the viewpoint moving a unit distance set in advance, a selection is made, in S170, as to whether or not to change the movement behavior. In the event of changing the movement behavior (Yes), the movement behavior setting step S150 and the viewpoint movement step S160 are repeated. In the event of not changing the movement behavior (No), a selection is made, in S180, as to whether or not to continue the movement.

In the event of continuing the movement (Yes), the viewpoint movement step S160 is executed, while in the event of not continuing the movement (No), the simulation is finished.

Advantages of Embodiment

According to the heretofore described embodiment, the following kinds of advantage are obtained.

1. As the viewpoint movement unit 172 moves the viewpoint, while periodically fluctuating the viewpoint in at least the vertical direction, in accordance with the movement behavior set by the movement behavior setting unit 173, it is possible to represent the vertical movement of the head, and the fluctuation of the movement, corresponding to the step (footwork).

By this means, a realisticness of the simulation increases significantly, and it is possible to accurately represent the vision and a sensation obtained when moving while wearing the spectacle lens 3. For example, it is possible to impart a sensation obtained when a floating phenomenon occurs, due to the optical distortion, or the prismatic action, of the spectacle lens 3, to someone watching the display section 13.

For this reason, according to the simulation apparatus of some aspects of the invention, it being possible to confirm the vision and the sensation obtained when wearing the spectacle lens 3, it is possible to prevent a problem wherein the actually manufactured spectacle lens 3 is not appropriate for the customer, or the like, who is the lens wearer.

2. As the movement behavior setting unit 173 can set the movement by walking as the movement behavior, it is possible to confirm, by simulation, the vision, and the sensation, at a time of a movement by walking, which is the movement behavior with the highest frequency of use in everyday life, and is also a movement behavior with which the floating phenomenon is likely to occur.

3. As the movement behavior setting unit 173 can set the movement by ascending or descending the stairs as the movement behavior, it is possible to confirm, by simulation, the vision, and the sensation, at a time of a movement by ascending or descending the stairs, which is a movement behavior with a comparatively high frequency of use in everyday life, and is also the movement behavior with which the floating phenomenon is most likely to occur.

4. As the viewpoint movement unit 172 periodically fluctuates the height of the viewpoint in accordance with a stride length and movement speed which have a large effect on the viewpoint fluctuation, it is possible to accurately represent the vision, and the sensation, at the time of moving.

5. As the viewpoint movement unit 172 fluctuates the viewpoint in the vertical direction in such a way that the height h of the viewpoint from the floor level is h = H + α·sin (2πt/ω), it is possible, based on a simplified conditional expression, to simulate the fluctuation of the viewpoint in the vertical direction, while keeping an amount of calculation to a minimum.

6. As the viewpoint movement unit 172 periodically fluctuates the viewpoint in the horizontal direction in accordance with the stride length and movement speed, it is possible to accurately represent the vision, and the sensation, at the time of moving.

7. As the stride length setting unit 174 sets the depth of the stair tread 22 of the stairs 21 as the stride length, actually measuring the stride length of a spectacles wearer, and inputting the stride length into the simulation apparatus 1, becomes unnecessary, and it is possible to simplify the operation of the simulation apparatus 1.

8. As the spectacle lens 3 is made a progressive refractive power lens, it is possible to confirm, by simulation, the vision, and the sensation, at the time of a movement for the progressive refractive power lens with which, there being an optical distortion due to the near addition power at the bottom of the lens, the floating phenomenon is particularly likely to be a problem.

9. As the parameter calculation unit 177, in the stair parameter calculation step S157, takes into consideration the height Y of one step of the stairs 21, and increases the magnitude α in the event that the height Y is large, it is possible to more accurately represent the vision, and the sensation, at the time of ascending or descending the stairs.

Modifications of Embodiment

The invention, not being limited to the heretofore described embodiment, also includes the modifications shown hereafter, without departing from the scope of the invention.

As the operation of the simulation apparatus, the example has been given of the configuration wherein the design step S110 is executed before the virtual space construction step S120, but this is not limiting. It is sufficient that the design step S110 is executed sometime before the image display step S140.

Also, the example has been given of the configuration wherein, in the movement behavior setting step S150, the speed setting step S151 is executed before the standard height setting step S152, but this is not limiting. It is sufficient that the speed setting step S151 is executed sometime before the movement mode setting step S153.

The configuration has been adopted wherein, in the movement behavior setting step S150, a user sets, and selects, the movement behavior, but this is not limiting.

For example, it is also acceptable to adopt a configuration wherein the movement behavior setting unit 173, based on the customer's personal information retrieved from the recording section 14, and on the position of the viewpoint in the virtual space, automatically sets the movement behavior. Specifically, the movement behavior setting unit 173, based on information on, for example, the customer's age, sex and the like, automatically sets the standard movement speed, stride length, and reference height H. Also, for example, in the event that the viewpoint is in a vicinity of the stairs 21, and the field of view is facing the stairs 21, the movement mode is automatically set to the "movement by ascending or descending the stairs".

According to this kind of configuration, it is possible to easily move the viewpoint, without doing a troublesome movement behavior setting.

The example has been given of the configuration wherein the viewpoint movement step S160 finishes on the viewpoint moving the unit distance set in advance, but this is not limiting.

For example, it is also acceptable to arrange in such a way that, setting a movement destination point by providing the movement behavior setting unit 173 and a separate movement destination setting unit, the viewpoint movement step S160 finishes when the viewpoint reaches the movement destination point.

Also, it is also acceptable to arrange in such a way that, for example, the movement of the viewpoint continues while a specific button of the input section 12 is being pressed, and the viewpoint movement step S160 finishes when a pressing force on the button is released.

The "movement by walking" and "movement by ascending or descending the stairs" have been given as examples of the movement mode, but this is not limiting. It is also acceptable to set various kinds of movement behavior as the movement mode, such as, for example, an ascending or descending by an escalator, a ladder or the like, or a movement by a means of transport such as a bicycle, a motorcycle or a car.

The border of the portions of the progressive refractive power lens which cannot be used is shown by the broken line 31, but it is also acceptable that there is no broken line 31. As long as an image processing providing a differing visibility is done in each area, the customer can confirm the difference in visibility of each area, even without the broken line 31.

Furthermore, the invention can not only be configured as the kind of simulation apparatus 1 shown in the heretofore described embodiment, but can also be configured as a simulation program which causes a calculation unit, such as a computer, to function as the simulation apparatus 1, and as a recording medium, such as a CD-ROM or a memory card, on which the simulation program is recorded in such a way as to be readable by the calculation unit.

As well as this, a specific structure and procedure for implementing the invention can be appropriately changed to another structure, or the like, without departing from the scope of the invention.

**Claims**

1.  A simulation apparatus (1), comprising:

    a design unit (162) which designs a spectacle lens in accordance with a lens wearer's vision;
    a virtual space construction unit (161) which constructs a virtual space;
    a viewpoint setting unit (171) which sets a viewpoint in the virtual space;
    an image compilation unit (181) which compiles a basic image representing a field of view at the viewpoint;
    an intermediate processing unit (182) which processes the basic image in accordance with the vision, and compiles an intermediate image representing a field of view at the viewpoint with the lens wearer's unaided eye;
    a wearing condition processing unit (183) which processes the intermediate image, and compiles a wearing condition image representing a field of view at the viewpoint obtained when the lens wearer wears the spectacle lens;
    a display unit (13) which displays the wearing condition image;
    a viewpoint movement unit (172) which moves the viewpoint in the virtual space; and
    a movement behavior setting unit (173) which sets a movement behavior of the viewpoint, wherein
    the viewpoint movement unit moves the viewpoint while periodically fluctuating the viewpoint in at least a vertical direction in accordance with the movement behavior.

2.  The simulation apparatus according to claim 1, wherein
    the movement behavior setting unit can set a movement by walking as the movement behavior.

3.  The simulation apparatus according to claim 1 or 2, wherein
    the movement behavior setting unit can set a movement by ascending or descending stairs as the movement behavior.

4.  The simulation apparatus according to claim 2 or 3, wherein
    the movement behavior setting unit includes:
    a stride length setting unit (174) which sets a stride length of the lens wearer; and

    a speed setting unit (175) which sets a movement speed of the viewpoint, wherein
    the viewpoint movement unit periodically fluctuates a height of the viewpoint from a floor level in the virtual space in accordance with the stride length and movement speed.

5.  The simulation apparatus according to claim 4, wherein
    the movement behavior setting unit includes:
    a reference height setting unit (176) which sets a height of the lens wearer's eye from the floor level as a reference height H; and
    a parameter calculation unit (177) which, based on the stride length and movement speed, calculates a period $\omega$ of the lens wearer's footwork and a magnitude $\alpha$ of a fluctuation of the viewpoint in the vertical direction, wherein
    the viewpoint movement unit fluctuates the viewpoint in the vertical direction in such a way that a height h of the viewpoint from the floor level in the virtual space obtained when a time t has elapsed from a start of the viewpoint movement becomes

    $$h = H + \alpha \cdot \sin\ (2\pi t / \omega).$$

6.  The simulation apparatus according to claim 4 or 5, wherein
    in the event that the movement behavior setting unit sets the movement by ascending or descending the stairs,
    the stride length setting unit sets a depth of a stair tread of the stairs as the stride length.

7.  The simulation apparatus according to any one of the preceding claims, wherein
    the viewpoint movement unit moves the viewpoint while periodically fluctuating the viewpoint in a horizontal direction in accordance with the movement behavior.

8.  The simulation apparatus according to any one of the preceding claims, wherein
    the spectacle lens is a progressive refractive power lens which has a progressive surface.

9.  A simulation program which causes a calculation unit to function as the simulation apparatus according to any one of the preceding claims.

10. A simulation program recording medium on which the simulation program according to claim 9 is recorded in such a way as to be readable by the calculation unit.

**FIG. 1**

PROCESSING SECTION ~16

VIRTUAL SPACE CONSTRUCTION UNIT ~161

DESIGN UNIT ~162

VIEWPOINT ADJUSTMENT UNIT ~17

IMAGE ADJUSTMENT UNIT ~18

VIEWPOINT SETTING UNIT ~171

IMAGE COMPILATION UNIT ~181

VIEWPOINT MOVEMENT UNIT ~172

INTERMEDIATE PROCESSING UNIT ~182

WEARING CONDITION PROCESSING UNIT ~183

MOVEMENT BEHAVIOR SETTING UNIT ~173

STRIDE LENGTH SETTING UNIT ~174

REFERENCE HEIGHT SETTING UNIT ~176

SPEED SETTING UNIT ~175

PARAMETER CALCULATION UNIT ~177

INPUT SECTION ~12

DISPLAY SECTION ~13

MEMORY ~15

RECORDING SECTION ~14

EP 2 098 902 A1

**FIG. 2**

START

DESIGN STEP — S110

VIRTUAL SPACE CONSTRUCTION STEP — S120

VIEWPOINT SETTING STEP — S130

IMAGE DISPLAY STEP — S140

MOVEMENT BEHAVIOR SETTING STEP — S150

VIEWPOINT MOVEMENT STEP — S160

S170
CHANGE MOVEMENT BEHAVIOR? — YES

NO

S180
CONTINUE MOVEMENT? — YES

NO

END

FIG. 3

A (VIEWPOINT)

h

21

22

X

Y

2

S140

```
       ┌─────────────┐
       │    START    │
       └─────────────┘
              │
              ▼
  ┌───────────────────────┐
  │     BASIC IMAGE       │─── S141
  │   COMPILATION STEP    │
  └───────────────────────┘
              │
              ▼
  ┌───────────────────────┐
  │     INTERMEDIATE      │─── S142
  │   PROCESSING STEP     │
  └───────────────────────┘
              │
              ▼
  ┌───────────────────────┐
  │  WEARING CONDITION    │─── S143
  │   PROCESSING STEP     │
  └───────────────────────┘
              │
              ▼
  ┌───────────────────────┐
  │     DISPLAY STEP      │─── S144
  └───────────────────────┘
              │
              ▼
       ┌─────────────┐
       │     END     │
       └─────────────┘
```

# FIG. 4

FIG. 5A

201

FIG. 5B

202

FIG. 5C

3    31

203

S150

```
        ┌─────────────┐
        │    START    │
        └─────────────┘
               │
               ▼
   ┌────────────────────────┐
   │   SPEED SETTING STEP    │── S151
   └────────────────────────┘
               │
               ▼
   ┌────────────────────────┐
   │   REFERENCE HEIGHT      │── S152
   │     SETTING STEP        │
   └────────────────────────┘
               │
               ▼
   ┌────────────────────────┐
   │    MOVEMENT MODE        │── S153
   │     SETTING STEP        │
   └────────────────────────┘
        │                                    │
        ▼                                    ▼
   ┌──────────────────┐        ┌────────────────────────┐
   │  STRIDE LENGTH   │── S154 │ AUTOMATIC SETTING STEP  │── S156
   │   SETTING STEP   │        └────────────────────────┘
   └──────────────────┘                     │
        │                                    ▼
        ▼                        ┌────────────────────────┐
   ┌──────────────────┐          │    STAIR PARAMETER      │── S157
   │ WALKING PARAMETER│── S155    │   CALCULATION STEP      │
   │ CALCULATION STEP │          └────────────────────────┘
   └──────────────────┘                     │
        │◄──────────────────────────────────┘
        ▼
   ┌─────────────┐
   │    END      │
   └─────────────┘
```

FIG. 6

FIG. 7

FIG. 8

HEIGHT h' FROM
FLOOR LEVEL

α

ω

H

H

H

Y

22

21

X

TIME t

FIG. 9

HORIZONTAL
DIRECTION
POSITION

$2\omega$

$\beta$

TIME t

FIG.10

Europäisches
Patentamt

European
Patent Office

Office européen
des brevets

## EUROPEAN SEARCH REPORT

Application Number

EP 09 00 3083

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2006 343778 A (SEIKO EPSON CORP) 21 December 2006 (2006-12-21) * abstract * ----- | 1-10 | INV. G02C7/02 G02C13/00 |
| Y | JP 07 073338 A (MATSUSHITA ELECTRIC IND CO LTD) 17 March 1995 (1995-03-17) * abstract * ----- | 1-10 | |
| Y | EP 0 916 375 A (SEGA ENTERPRISES KK [JP] SEGA CORP [JP]) 19 May 1999 (1999-05-19) * paragraph [0122] * ----- | 1-10 | |

TECHNICAL FIELDS
SEARCHED      (IPC)

G02C

The present search report has been drawn up for all claims

| Place of search | Date of completion of the search | Examiner |
|---|---|---|
| Munich | 9 April 2009 | Jestl, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
............................................................................
& : member of the same patent family, corresponding
document

EPO FORM 1503 03.82 (P04C01)

**EP 2 098 902 A1**

**ANNEX TO THE EUROPEAN SEARCH REPORT
ON EUROPEAN PATENT APPLICATION NO.**                    EP 09 00 3083

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2009

| Patent document cited in search report | | Publication date | Patent family member(s) | | Publication date |
|---|---|---|---|---|---|
| JP 2006343778 | A | 21-12-2006 | JP | 3897058 B2 | 22-03-2007 |
| JP 7073338 | A | 17-03-1995 | JP | 3105131 B2 | 30-10-2000 |
| EP 0916375 | A | 19-05-1999 | ES | 2309435 T3 | 16-12-2008 |
| | | | WO | 9839074 A1 | 11-09-1998 |
| | | | JP | 3882287 B2 | 14-02-2007 |
| | | | JP | 10305165 A | 17-11-1998 |
| | | | TW | 398986 B | 21-07-2000 |
| | | | US | 6361436 B1 | 26-03-2002 |

EPO FORM P0459

For more details about this annex : see Official Journal of the European Patent Office, No. 12/82

**EP 2 098 902 A1**

## REFERENCES CITED IN THE DESCRIPTION

**Patent documents cited in the description**

- JP 2006343778 A

- JP 7073338 A